# EUROPEAN PATENT APPLICATION

(11) **EP 1 045 612 A1**
(43) Date of publication of application: **18.10.2000**
(21) Application number: 99480019.1
(22) Date of filing: 12.04.1999
(51) Int. Cl.: H04Q 11/04, H04L 25/14

(54) **Method and system for re-synchronizing channels supporting the inverse multiplexing function**

(71) Applicant: INTERNATIONAL BUSINESS MACHINES CORPORATION, Armonk, NY 10504 (US)
(72) Inventor: Mommeja, Lionel, 06000 Nice (FR); Chauffour, Pascal, 06800 Cagnes sur Mer (FR); Roman, Thierry, 06100 Nice (FR)
(74) Representative: Etorre, Yves Nicolas

(57) **Abstract**

A method for re-synchronizing at least one group of bearer channels used for inverse multiplexing at least one link over a switched network according to the BONDING mode 1 specification. In the ISDN networks the bearer channels are the B channels. The method defines a role assignment, initiator or completor role, between the nodes of the network, intercepts the request for re-synchronization which are sent by a link monitoring function detecting the link failures; it communicates and coordinates the re-synchronization process between the initiator and the completor sides; this can be done through the signaling channel, D channel for ISDN. Both the initiator side and the completor sides request a re-synchronization to its local Inverse Multiplexing Unit (IMU); the access to the local IMU is reserved more particularly with a system of token as the IMU is a simple single task system.

## Description

### TECHNICAL FIELD

This invention relates to network equipment interface to switched networks such as ISDN networks. More particularly, the invention applies to the use of the Inverse Multiplexing function implementing the Bonding mode 1 specification on said network interface shared by more than one group of bearer channels.

### BACKGROUND ART

The inverse multiplexing function converts a wideband communication on a high speed link into a group of combined switched lower speed channels. This function is very useful when using for conveying, for instance, 2 Mbps bandwidth on ISDN B channels of 56 or 64 kbit/s. For instance in Europe ISDN primary ISDN services provide 30 B channels for data and one D channel for control and basic ISDN services provide two B channels for data and one D channel for control. The problem of inverse multiplexing is to be able to re-synchronize the channels in order to rebuild the high speed link on the other side of the ISDN network. With an objective of uniformization, the BONDING consortium has defined the inverse multiplexing function in the BONDING specification, dated September 1, 1992 and later updates.

BONDING mode 1 supports user data rates multiples of the bearer rate for instance 30 channels of 64 Kbps for the primary ISDN service. It provides the user data rate with the full available bandwidth, but does not provide an in-band monitoring function. It provides a solution for sending an initial set of frames, so called training sequence, to synchronize (phase align) the sending of multiplexed data for a correct de-multiplexing of that high speed data channel on the other side of the network. Error conditions on one or more channels that disturb overall system synchronization are not recognized automatically by BONDING mode 1 specification.

Other options in BONDING specifications propose the use of other BONDING modes in both side of the network to provide a warranty of the quality of the transmission: Mode 2 and Mode 3; for both of them the principle is to improve transmission quality by using data transfer frames including some bits dedicated to store transmission information allowing transmission quality analysis or recovery which are read on the other side of the network. This is quite costly, a part of the bandwidth being used for transport of control information. BONDING mode 1 is the most used as being more simple, the quality of monitoring and failure recovery being generally performed at the upper layers in the application using the BONDING function.

The IBM European patent application filed the same day, GE999021, proposes an extension of the BONDING mode 1 by allowing the application using the BONDING function, when a loss of synchronization between channels, to re-synchronize a group of channels by reissuing the sequence of initial synchronization as described in BONDING mode 1 but without intermediate disconnection of the group of B channels. In GE999021 a request for re-synchronization is sent by the adapter from one side of the ISDN network to the other side once a failure in the connection has been detected. The advantage of this solution is to improve the reliability of the bonded channels while keeping a simpler Inverse Multiplexing function, compared to BONDING mode 2 and BONDING mode 3 solutions.

One problem raised by the solution of the re-synchronization is the fact that it applies only to the support to one channel group. The inverse multiplexing function is usually implemented as a hardware component, the Inverse Multiplexing Unit (IMU), in the physical layer implementation in the adapter card of the network equipment attached to ISDN network. For reason of cost reduction in the adapter, this component may support more than one group of channels. This is the case, for instance, when the inverse multiplexing function is applied to backup connections to ISDN network. It may be useful in the configuration of a network node to have an adapter connected to the ISDN network for backup of lines and implementing the inverse multiplexing function. Depending on the bandwidth of the link in failure needing a backup, the inverse multiplexing function will apply the bandwidth to the needed number of ISDN channels. It is recommended to have one adapter supporting all the backup lines for the node; the backup lines corresponding to the ISDN accesses will be supported by the IMU component which will handle more than one group of channels at a time. When more than one group of channels need re-synchronization, according to the invention of GE999021, the requests for synchronization are received in any order at each side of the connected groups of channels, there is a risk of deadlock situation when the groups selected for re-synchronization are not the same order on each side of the network: a first IMU at one side of the network may initiate a request for synchronization of one group of B channels towards a second IMU at the other side of the network; during this time, the second IMU has accepted to send a request of synchronization for a second group of B channels; as the IMUs are single task, they are waiting for an answer and cannot handle the other request. A first solution to this problem could be to implement multi-task IMUs but this is very costly.

Consequently, it is an object of the invention to provide a way to allow re-synchronization of more than one group of B channels supporting the mode 1 inverse multiplexing function and sharing a same single task mode 1 inverse multiplexing unit.

### SUMMARY OF THE INVENTION

In brief, the object is achieved by a method implemented in network equipment connected to a switched network, for re-synchronizing without disconnecting, upon detection of a link failure by a monitoring function, at least one group of bearer channels each group corresponding to the split of at least one link by a single task mode inverse multiplexing function implementing BONDING mode 1 specification, said method comprising the steps of:
- assigning roles of initiator side to one side of the bearer channel groups and of completor sides to the ones connecting said bearer channel groups;
- receiving from the monitoring function, a request for re-synchronization for a selected group of bearer channels which has been identified as having a failure;
- advising the completor side of the corresponding group without disconnecting the bearer channels that said group is selected for re-synchronization;
- once advised by the initiator side, the completor side requesting access to the local single task mode inverse multiplexing function for re-synchronization of the selected group of bearer channels;
- once the access to the local single task mode inverse multiplexing function is reserved, the completor side advising the initiator side without disconnecting the bearer channels that it will start the re-synchronization process;
- once advised by the completor side, the initiator side requesting access to the local single task mode inverse multiplexing function for re-synchronization of the selected group of bearer channels.

With the solution of the present invention using an Inverse Multiplexing Unit operating in single task mode and supporting more than one group of bearer channels (called B channels for the ISDN networks) corresponding to more than one BONDING mode 1 inverse multiplexed link, these more than one group can be re-synchronized without any risk of deadlock.

### BRIEF DESCRIPTION OF THE DRAWINGS

The foregoing and other objects, aspects and advantages will be better understood from the following detailed description of a preferred embodiment of the invention with reference to the drawings in which:

Fig. 1 illustrates the placement of the different logical blocks functions involved in one embodiment of the invention.

Fig. 2 shows a general flow chart of one embodiment of the invention

Fig. 3A, 3B, 3C, 3D illustrate a flow showing a sample scenario of 3 apparatus as per fig. 1 using the preferred embodiment

Fig. 4 illustrates the use of inverse multiplexing function in one node having two accesses to ISDN.

### DETAILED DESCRIPTION OF THE PREFERRED EMBODIMENT

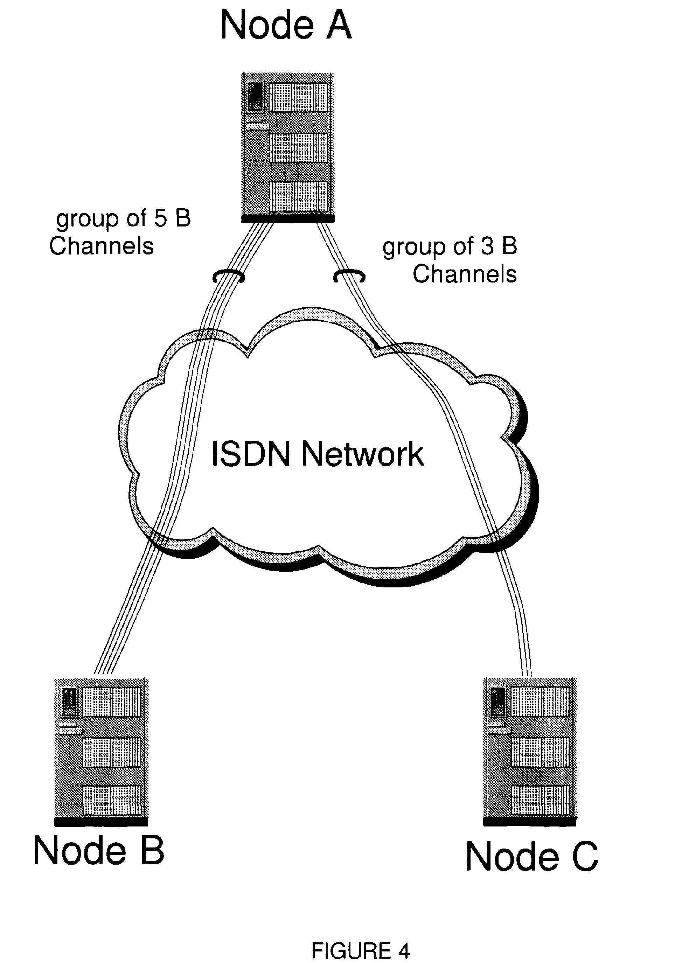

Figure 4 illustrates the connection of three nodes through ISDN network, nodes A, B, C using the inverse multiplexing function. Node A has two accesses to ISDN network. For connection to Node B, Node A needs to use a group of 5 B channels on its access to ISDN. This means that the Inverse multiplexing Unit of Node A will split the traffic of 5 x 64 Kbps into 5 B channels of 64 Kbps to send to Node B. At reception, Node B will re-synchronize with its Inverse Multiplexing Unit the 5 B channels split traffic into one link. For connection to NODE C, NODE C uses a group of 3 B channels; the traffic split on these 3 B channels by Node A will be re-synchronized and rebuilt on the 3x64 kbps link in node C.

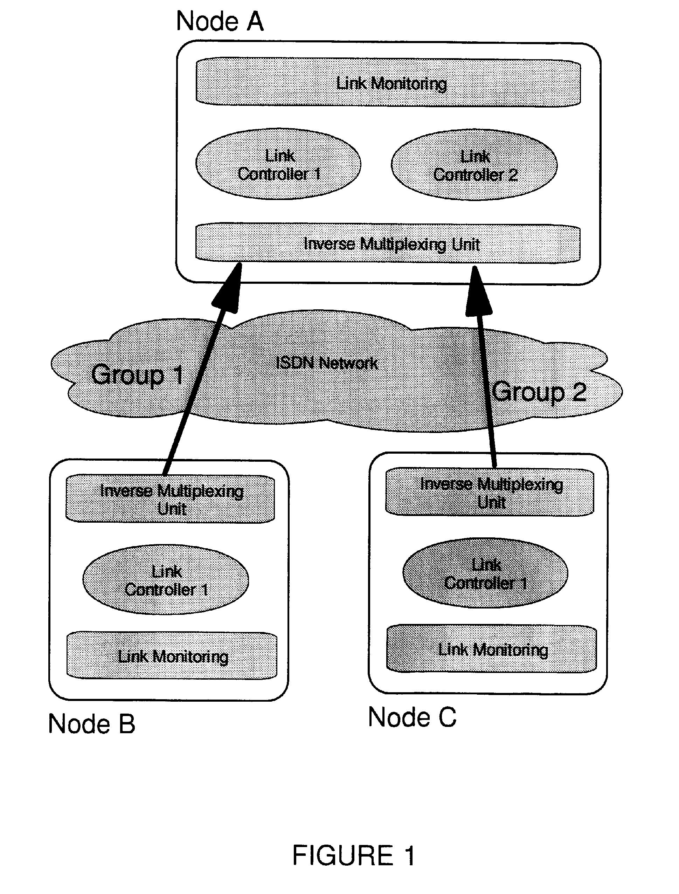

Fig. 1 illustrates the logical blocks used by the invention that are usually implemented in the adapter of the network nodes connected through the ISDN network. Connection and disconnection of the B channels as well as the D-channel signaling are standard ISDN operations. The Inverse Multiplexing function is implemented in an Inverse Multiplexing Unit component at the physical layer of the networking interface. The IMU of node A supports two groups of B-Channels, Group 1 and Group 2; this IMU is a single task unit able to start a re-synchronization task for a given group when such a command is sent by an upper layer. These groups are bundles of ISDN B-Channels carrying the data exchange on their corresponding logical links. The groups of B channels are established over the ISDN network and the same architecture is found in the adapters of the network nodes, node A and node B connecting the groups of B channels on the other side of the ISDN network. The arrows of Fig 1 illustrates the data sent through the ISDN B channels once the connection is established. Link monitoring functions operating in the upper layer in the adapters, are usual well known applications able to communicate together over the ISDN connections. They check the status of the links, detect the link failures and thus the loss of synchronization of one group of B channels; with the solution of GE999021 when a failure is detected for one group of channels, instead of advising the other layers for disconnection of the B channels, the Link Monitoring asks the IMU for re-synchronization of the B-channels of the group. In the preferred embodiment of the present invention, for each group of B channels, an intermediate layer, the Link Controller, intercepts the request for re-synchronization of the corresponding group coming from the Link Monitor and interfaces itself with the IMU. In Figure 1, node A supporting two groups of B channels comprises Link Controller 1 and Link Controller 2. In other embodiments of the invention one unique Link Controller for all the groups supported by the IMU can be implemented, however this supposes also a multitasking support for this function; that is why it is simpler to have one Link Controller function per group of B channels. One link controller on one side of the network will play the particular part of initiating the re-synchronization for the group, will communicate with the corresponding Link controller for the group at the other side of the ISDN network. The Link Controllers are able to access the local IMU; as the IMU is a single task unit the access maybe controlled by a token. The link controllers access the D-channel signaling which is a standard ISDN operations.

In the following description of the embodiment of the invention, the NOTIFY message is the NOTIFY message standardized by ETSI in ETS300-102 DSS1 signaling protocol for ISDN network. To each NOTIFY message is attached a 'call reference' number. In the preferred embodiment is also used the 'master channel' of the group of channels which is the channel, first of the list of B channels of the group, used to exchange parameters during the set up phase at the beginning of the bonding mode 1 establishment.

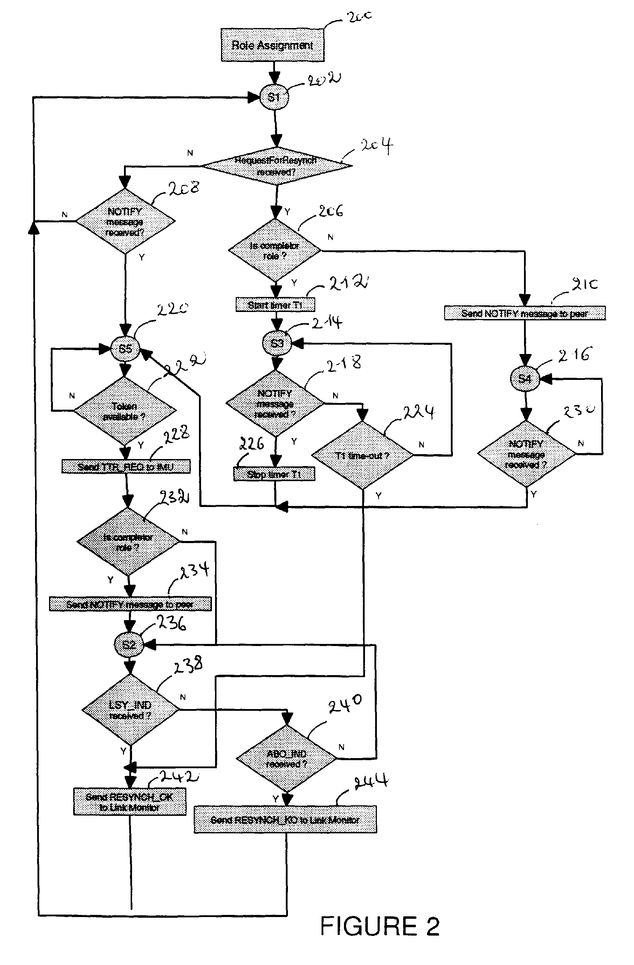

Fig. 2 shows the flow chart of the method to perform the re-synchronization of a group of bonded channels used by an application as an inverse multiplexed high speed connecting link.

The following elements are used in the flow chart:

### 1. Events

a. Token available the IMU access is controlled by a Token which allows for the serialization of multiple requests.
b. RequestForResynch it is sent by the Link Monitor to request a re-synchronization for a group of bonded channels.
c. NOTIFY message it is the ETS300-102 standard message sent over the D-channel between peer Link Controllers.
d. T1 time-out it is the timer started by the Completor side to protect for the reception of the NOTIFY message, it should be at least greater or equal to the IMU synchronization time by the maximum number of groups of bonded channels on the same IMU.
e. TTR_REQ it is the Try To Re-synchronize Request issued by the Link Controller toward the IMU for a group of bonded channels.
f. LSY_IND it is the successful synchronization indication between peer IMU for a group of bonded channels. It is issued by the IMU toward the Link Controller.
g. ABO_IND it is the unsuccessful synchronization indication between peer IMU for a group of bonded channels. It is issued by the IMU toward the Link Controller.
h. RESYNCH_OK it is the successful synchronization indication issued by the Link Controller toward the Link Monitor.
i. RESYNCH_KO it is the unsuccessful synchronization indication issued by the Link Controller toward the Link Monitor.

### 2. States

a. S1 "Steady State" the group of bonded channels handled by the Link Controller are synchronized i.e. in the BONDING "ACTIVE-MODE 1" state.
b. S2 "Re-synchronizing" the re-synchronization of the group of bonded channels handled by the Link Controller has been requested.
c. S3 "Wait for Passive Re-synchronization" the Completor side is waiting for the NOTIFY message from the Initiator side.
d. S4 "Wait for acknowledgment" the Initiator side is waiting for the NOTIFY message back from the Completor side.
e. S5 "Wait For Token" the Link Controller is waiting for the Token to access the IMU (i.e. another Link Controller is already in and the IMU cannot handle more than one request at a time).

At configuration time, the Link Controller on both side of potentially bonded channels are assigned roles (200) as Initiator on one side and Completor on the opposite side of the ISDN network; all the Link Controllers attached to the same Inverse Multiplexer Unit must be configured with the same role ; as the solution applies only to the re-synchronization, we consider here that the said group of channels is already in the BONDING "ACTIVE-MODE 1" state, so the associated Link Controllers are assigned the "Steady State" (202) virtual initial state.

The Link Monitoring entities exchange liveness messages at periodic intervals to detect link failures on both side of a group of bonded channels ; upon detection of a link failure, the Link Monitoring entities request to the associated Link Controllers to re-synchronize the group of bonded channels ( RequestForResynch event ).

While in "Steady State" state (S1) (202), the Link Controller may receive several events:
■ the RequestForResynch event is processed as the following sequence:
   A. If the Link Controller identifies itself as initiator (answer NO to test 206) :
      1. It retrieves the D-channel signaling call reference associated with the connection of the master channel within the group of bonded channels and requests the D-channel signaling stack to send a NOTIFY message (210) through the connection of the master channel
      2. It enters (216) the "Wait for acknowledgment" state (S4)
   B. else (answer YES to test 206):
      1. It starts a timer T1 (212) to wait for the NOTIFY message to come
      2. It enters (214) the "Wait for Passive Re-synchronization" state (S3)
■ The NOTIFY message event is processed by the Link Controller in the following sequence :
   1. It enters (220) the "Wait For Token" state (S5)

While in "Wait for Passive Re-synchronization" (S3) (214) state, the Link Controller may receive several events:
■ The NOTIFY message event (answer yes to test 218) is processed by the Link Controller as the following sequence :

It stops (226) the timer T1

1. It enters the "Wait For Token" state (S5)
■ The T1 time-out event is processed (answer yes to test 224) by the Link Controller as the following sequence :
   1. It sends (242) the ResynchOk event to the application
   2. it enters (202) the "Steady State" state (S1)

While in "Wait for acknowledgment" state (S4) (216), the Link Controller may only receive (answer yes to test 230) the NOTIFY message event which is processed as the following sequence :

It enters (220) the "Wait For Token" state (S5)

While in "Wait For Token" state (S5) , the Link Controller may only receive the TOKEN available event which is processed (answer to test 222 is yes) as the following sequence :
1. It requests (228) the local IMU to start the re-synchronization ( TTR_REQ event sent to local IMU )
2. If the Link Controller identifies itself as completor (answer yes to test 232), It retrieves the D-channel signaling call reference associated with the connection of the master channel within the group of bonded channels and requests the D-channel signaling stack to send (234) a NOTIFY message through the connection of the master channel to acknowledge the reception of the NOTIFY message from the initiator side
3. It enters (236) the "Re-synchronizing" state (S2)

While in "Re-synchronizing" state (S2), the Link Controller may receive several events:
■ The LSY_IND event is processed (answer yes to test 238) by the Link Controller in the following sequence :
   1. It sends (242) the ResynchOk event to the application
   2. it enters (202) the "Steady State" state (S1)
■ If answer to test 238 is no, if the ABO_IND event is received (answer yes to test 240) it is processed by the Link Controller in the following sequence :
   1. It sends (244) the ResynchKo event to the application
   2. it enters (202) the "Steady State" state (S1)
■ If the ABO_IND event is not received (answer no to test 240), it enters (236), the "re-synchronizing" state, S2.

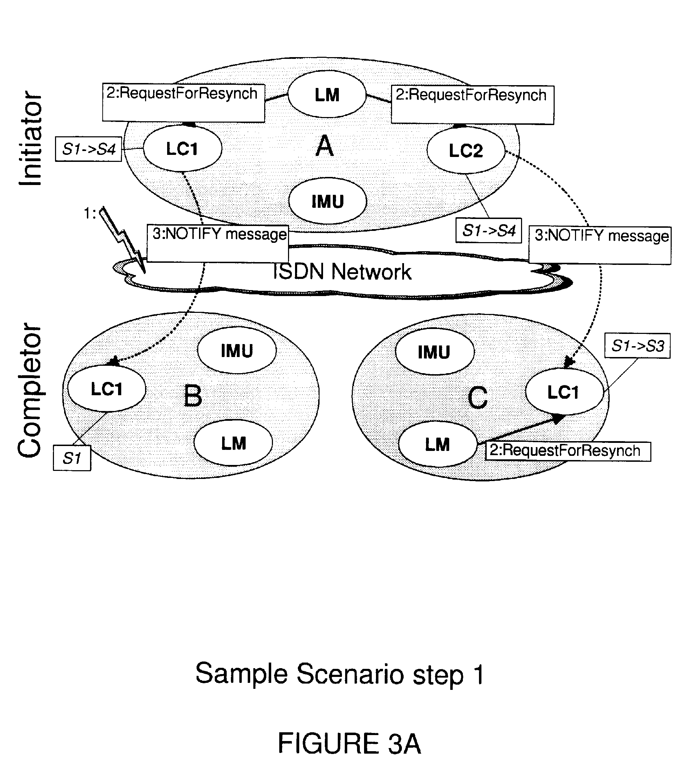

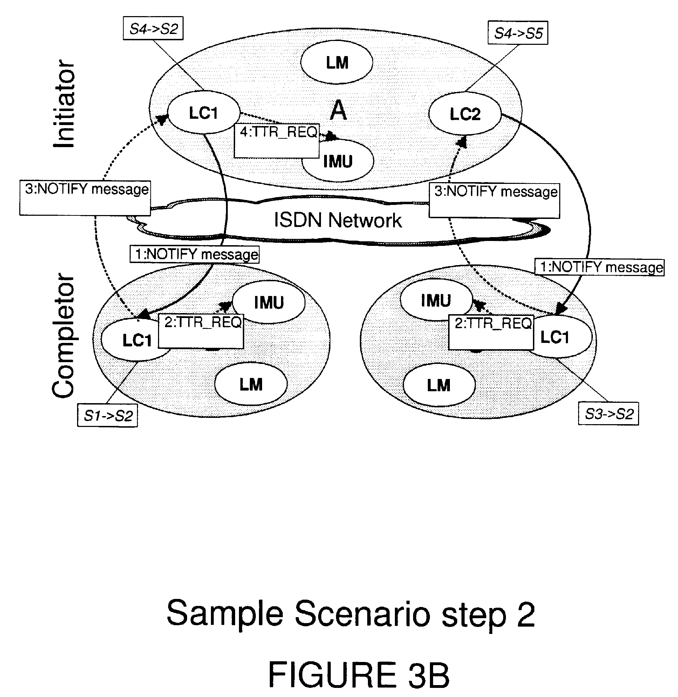

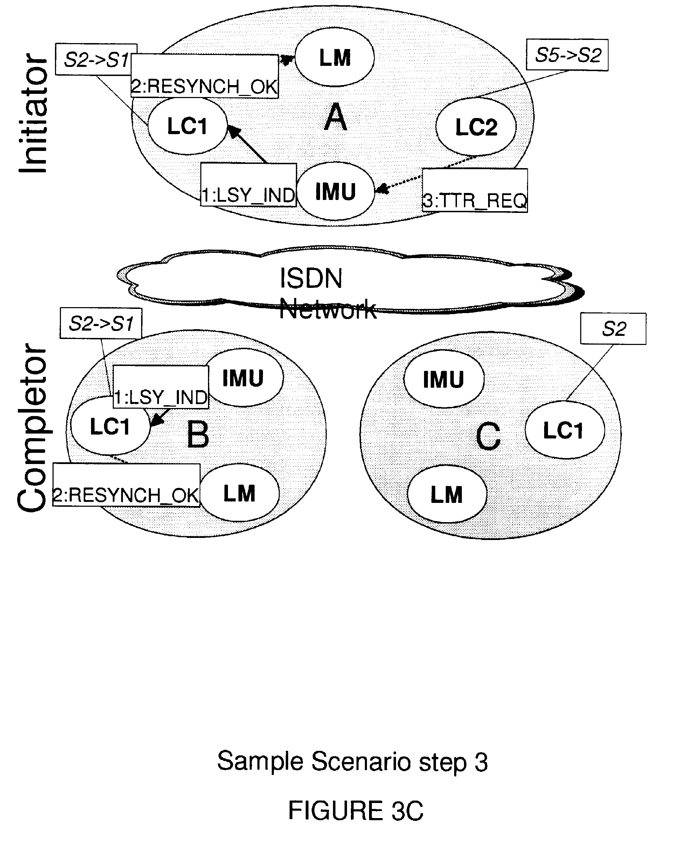

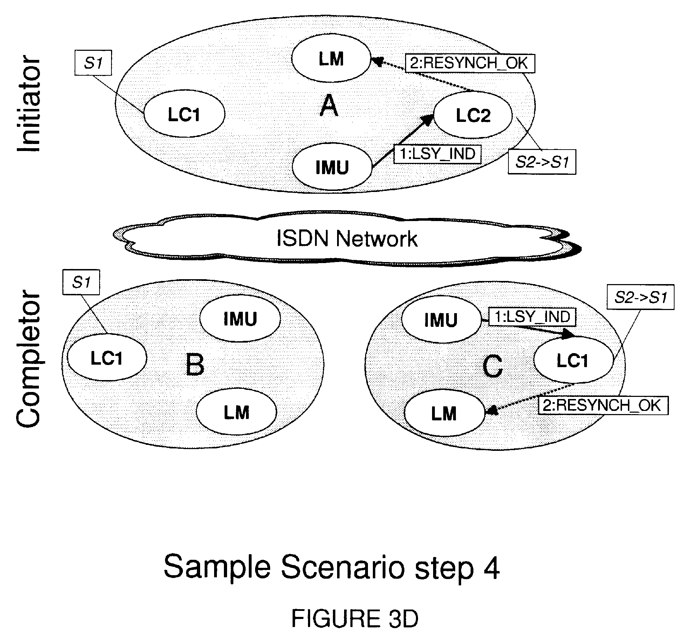

Fig. 3 shows a sample scenario of illustrating the behavior of three network nodes A, B & C implementing one preferred embodiment of the invention.

LM stands for the Link Monitor of the node, LCi stands for Link Controller #i, IMU stands for Inverse Multiplexing Unit.

The events are written with their name prefixed by the sequence number in the form j: meaning the relative order within the scenario step.

An event associated with a dotted line means this is a consequence of another event with a lower sequence number.

The LC states, as defined per figure 2, are written in Si labels when no state transition occurs and Si->Sj labels when there is a state transition from state Si to Sj in the scenario step.

In the scenario, we assume the following:
1. 2 groups of bonded channels are set, one established between Node A and Node B under control of LC1-A and LC1-B, the other between Node A and Node C under control of LC2-A and LC1-C.
2. Node A is the Initiator side, Nodes B & C are Completors.

The scenario split in 4 steps is initiated by the desynchronization of some bonded B-channels inside the ISDN network (event 1: on step 1) which yields the Link Monitors to request the system re-synchronization (event 2: on step 1).

In Figure 3A for Step 1, the Link Monitors LM on nodes A & C detect the Liveness failure & sends the RequestForResynch (event 2:).
The Link Controllers LC1-A & LC2-A as initiators send the NOTIFY messages (events 3:).
The Link Controllers LC1-C starts the T1 timer and waits for the NOTIFY message sent by its peer.

In Figure 3B for Step 2, on receipt of the NOTIFY messages, LC1-B & LC1-C get the token and then request the IMU's to re-synchronize (event 2:) & send back the NOTIFY messages to the peer initiator side LC1-A & LC2-A (event 3:). LC1-C stops the T1 timer.
On receipt of the NOTIFY message, LC1-A get the token first to LC2-A & requests the IMU re-synchronization (event 4:). LC2-A waits for the token to become available.

In Figure 3C for Step 3: IMU on A & B get synchronized for the group of channels controlled by LC1-A & LC1-B (event 1:).
Upon indicating the RESYNCH_OK (event 2:), LC1-A frees the token which is taken by LC2-A to request the IMU re-synchronization (event 3:).

In Figure 3D for Step 4: IMU on A & C get synchronized for the group of channels controlled by LC2-A & LC1-C (event 1:). LC2-A & LC1-C then indicate RESYNCH_OK to LM (event 2:) and enter the S1 state.

The use of token for IMU access reservation is equivalent to any system for resource reservation which could be used in other embodiments of the invention. The use of NOTIFY message as part of the basic call services provided by the public ISDN networks is one possible way among others of communicating over the D channel. The use of the call reference of the master channel in the NOTIFY message sent by the initiator side allows the ISDN stack to identify the group selected for request of re-synchronization. This master channel call reference is one possible way among other alternatives to identify the group of channels for which the re-synchronization is required. The identification of the group allows to have at both sides, more than one group of B channels supported by the same IMU without any risk of deadlock. This allows a large range of possible backup configurations for links ISDN inverse multiplexed through ISDN B channels. This invention as described in the preferred embodiment can be used with the B channels and D channels of the ISDN networks. The invention can also apply to any private or public switched networks providing bearer channels at 56 kbps or 64 Kbps defined in the BONDING specs as "the network provided channels used to carry data". For communication between Link Controllers one possibility is to use the D channel of the ISDN access; any switched networks providing a signaling channel can use this embodiment also.

While the invention has been described in terms of preferred embodiments, those skilled in the art will recognize that the invention can be practiced with modifications within the spirit and the scope of the appended claims.

## Claims

1. A method implemented in network equipment connected to a switched network, for re-synchronizing without disconnecting, upon detection of a link failure by a monitoring function, at least one group of bearer channels each group corresponding to the split of at least one link by a single task mode inverse multiplexing function implementing BONDING mode 1 specification, said method comprising the steps of:
- assigning roles of initiator side to one side of the bearer channel groups and of completor sides to the ones connecting said bearer channel groups;
- receiving from the monitoring function, a request for re-synchronization for a selected group of bearer channels which has been identified as having a failure;
- advising the completor side of the corresponding group without disconnecting the bearer channels that said group is selected for re-synchronization;
- once advised by the initiator side, the completor side requesting access to the local single task mode inverse multiplexing function for re-synchronization of the selected group of bearer channels;
- once the access to the local single task mode inverse multiplexing function is reserved, the completor side advising the initiator side without disconnecting the bearer channels that it will start the re-synchronization process;
- once advised by the completor side, the initiator side requesting access to the local single task mode inverse multiplexing function for re-synchronization of the selected group of bearer channels.

2. The method of claim 1, wherein the advising steps of the initiator and the completor sides are done through the signaling channel provided with the switched network access.

3. The method of claim 2, wherein the switched network is an ISDN network, the bearer channels are the B channels and the signaling channel is the D channel provided with the ISDN access.

4. The method of claim 3 wherein the advising steps of the initiator and the completor sides consist in sending over the D channel, a standard ISDN NOTIFY message.

5. The method of claim 4 wherein the NOTIFY message includes as call reference the call reference of the master channel of the group of B channels.

6. The method of anyone of claims 1 to 5, wherein the access to the local single task mode inverse multiplexing function is reserved by the use of a token.

7. The method of anyone of claim 1 to 6 wherein the initiator and completor role assigning step is performed at the network generation time of the network equipment.

8. The method of anyone of claim 1 to 7 wherein the monitoring function is an application operating on each side of the network and is able to communicate over it.

9. A system, more particularly a network adapter, arranged for carrying out the steps of the method according to anyone of the preceding claims.

10. Computer readable medium comprising instructions adapted for carrying out the method according to anyone of claim 1 to 8.
